(19) Europäisches Patentamt
European Patent Office
Office européen des brevets

(11) Veröffentlichungsnummer: **0 066 819**
**B1**

(12) # EUROPÄISCHE PATENTSCHRIFT

(45) Veröffentlichungstag der Patentschrift: **17.04.85**

(51) Int. Cl.[4]: **C 09 B 62/085,** C 09 B 62/51, D 06 P 3/66, D 06 P 3/10

(21) Anmeldenummer: **82104752.9**

(22) Anmeldetag: **29.05.82**

(54) **Wasserlösliche Monoazoverbindungen, Verfahren zu ihrer Herstellung und ihre Verwendung als Farbstoffe.**

(30) Priorität: **06.06.81 DE 3122688**

(43) Veröffentlichungstag der Anmeldung: **15.12.82 Patentblatt 82/50**

(45) Bekanntmachung des Hinweises auf die Patenterteilung: **17.04.85 Patentblatt 85/16**

(84) Benannte Vertragsstaaten: **CH DE FR GB IT LI**

(56) Entgegenhaltungen:
**EP - A - 0 032 187**
**DE - B - 1 265 698**

**CHEMICAL ABSTRACTS, Band 78, Nr. 24, 18. Juni 1973, Seite 52, Nr. 148950r, Columbus, Ohio, USA**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Hoyer, Ernst, Dr., Eptingweg 3, D-6230 Frankfurt am Main 80 (DE)**

**EP 0 066 819 B1**

Anmerkung Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

Aus der japanischen Patentbekanntmachung Sho-38-23287 ist auf Seite 3 eine faserreaktive Azoverbindung (Azofarbstoff) bekannt, die die 1-(Dichlortriazinylamino)-8-naphthol-3,6-disulfonsäure als Kupplungskomponente enthält.

Mit der vorliegenden Erfindung wurden nunmehr wertvolle Azoverbindungen gefunden, die der allgemeinen Formel (1)

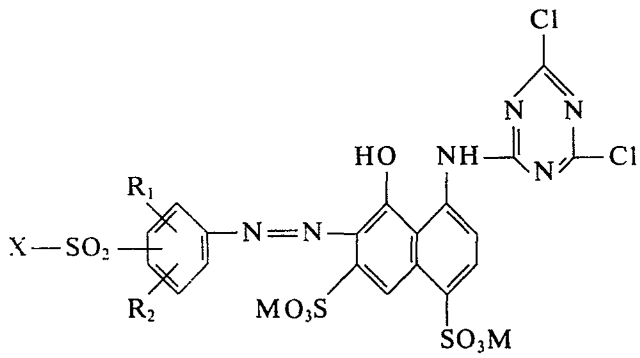

(1)

entsprechen; in dieser Formel bedeuten:

Die Gruppe der Formel $-SO_2-X$ ist in meta- oder para-Stellung zur Azogruppe an den Benzolkern gebunden;

$R_1$ ist ein Wasserstoffatom, eine Alkylgruppe von 1 bis 4 C-Atomen, wie die Äthylgruppe und insbesondere die Methylgruppe, oder eine Alkoxygruppe von 1 bis 4 C-Atomen, wie die Äthoxygruppe und insbesondere die Methoxygruppe;

$R_2$ ist ein Wasserstoffatom, eine Alkylgruppe von 1 bis 4 C-Atomen, wie die Äthylgruppe und insbesondere die Methylgruppe, oder eine Alkoxygruppe von 1 bis 4 C-Atomen, wie die Äthoxygruppe und insbesondere die Methoxygruppe, wobei

$R_1$ und $R_2$ zueinander gleiche oder voneinander verschiedene Bedeutungen besitzen können, wobei jedoch

$R_1$ und $R_2$ beide nicht gleichzeitig Wasserstoffatome bedeuten, falls die Gruppe $-SO_2-X$ in para-Stellung zur Azogruppe gebunden ist;

X steht für die Vinylgruppe oder eine Gruppe der Formel

$$-CH_2-CH_2-Y$$

in welcher Y eine alkalisch eliminierbare Gruppe bedeutet;

M ist ein Wasserstoffatom oder ein Alkalimetall oder das Äquivalent eines Erdalkalimetalls.

Von der Erfindung ausgenommen sind dementsprechend Verbindungen der allgemeinen Formel (1), in welcher $R_1$ und $R_2$ beide gleichzeitig Wasserstoffatome darstellen und die Gruppe $-SO_2-X$ gleichzeitig in para-Stellung zur Azogruppe gebunden steht.

Die erfindungsgemäßen Azoverbindungen können in Form ihrer freien Säure und bevorzugt in Form ihrer, insbesondere neutralen Alkalimetall- und Erdalkalimetallsalze vorliegen, so beispielsweise die Natrium-, Kalium- und Calciumsalze. Die neuen Verbindungen finden bevorzugt in Form dieser Salze ihre Verwendung zum Färben (im allgemeinen Sinne und einschließlich des Bedruckens verstanden) von hydroxy- und/oder carbonamidgruppenhaltigem Material, insbesondere in Form von Fasermaterial.

Die alkalisch eliminierbare Gruppe Y ist vorzugsweise ein Chloratom, die Acetoxygruppe, die Phosphatogruppe (entsprechend der allgemeinen Formel $-OPO_3M_2$ mit M der oben genannten Bedeutung), die Thiosulfatogruppe (entsprechend der allgemeinen Formel $-S-SO_3M$ mit M der obengenannten Bedeutung) und insbesondere die Sulfatogruppe (entsprechend der allgemeinen Formel $-OSO_3M$ mit M der obengenannten Bedeutung. Von den erfindungsgemäßen Verbindungen der allgemeinen Formel (1) sind insbesondere diejenigen hervorzuheben, in welchen X für die Vinylgruppe und insbesondere für die $\beta$-Sulfatoäthyl-Gruppe steht.

Insbesondere sind weiterhin bevorzugt die Verbindungen der allgemeinen Formel (1 a)

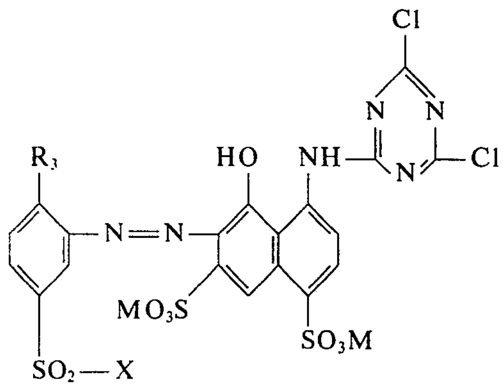

(1 a)

in welcher $R_3$ für die Äthylgruppe oder die Äthoxygruppe steht, bevorzugt jedoch ein Wasserstoffatom, die Methylgruppe oder die Methoxygruppe bedeutet, X die obengenannte, insbesondere bevorzugte Bedeutung besitzt und M wie oben definiert ist.

Die vorliegende Erfindung betrifft weiterhin Verfahren zur Herstellung der oben genannten und definierten Azoverbindungen der allgemeinen Formel (1). Die eine Verfahrensvariante ist dadurch gekennzeichnet, daß man eine aromatische Aminoverbindung der allgemeinen Formel (2)

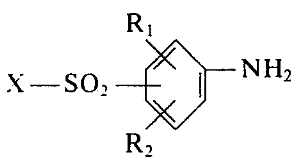

(2)

in welcher $R_1$, $R_2$ und X die obengenannten Bedeutungen haben, jedoch $R_1$ und $R_2$ nicht beide gleichzeitig für Wasserstoffatome stehen, wenn die Gruppe $-SO_2-X$ in para-Stellung zur Aminogruppe gebunden ist, diazotiert und mit einer Verbindung der allgemeinen Formel (3)

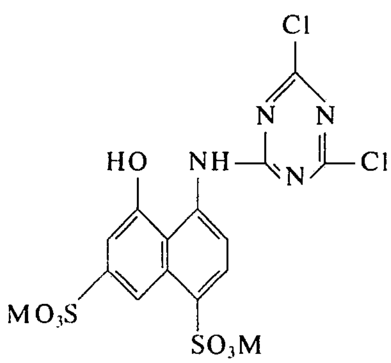

(3)

in welcher M die obengenannte Bedeutung besitzt, kuppelt. Eine andere erfindungsgemäße Verfahrensvariante ist dadurch gekennzeichnet, daß man eine Monoazoverbindung der allgemeinen Formel (4)

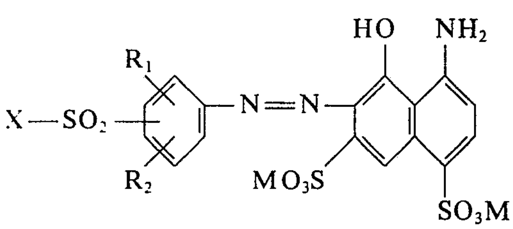

(4)

in welcher $R_1$, $R_2$, M und die Gruppe $-SO_2-X$ die für Formel (1) angegebene Bedeutungen haben, mit Cyanurchlorid (2,4,6-Trichlor-1,3,5-triazin) umsetzt.

Die Diazotierung der aromatischen Aminoverbindungen der allgemeinen Formel (2) kann analog altbekannten Verfahrensweisen durchgeführt werden. Ebenso erfolgt die Kupplungsreaktion analog bekannten Verfahrensweisen, wobei zu beachten ist, daß die in der Diazokomponente befindliche faserreaktive Gruppe der Formel $-SO_2-X$ keinen stärker alkalischen Bedingungen unterworfen wird, um eine Schädigung dieser faserreaktiven Gruppe zu vermeiden; vorteilhaft hält man den pH-Wert des

Mediums unterhalb von 7,5. Bevorzugt wird deshalb die Kupplungsreaktion bei einem pH-Wert zwischen 4 und 7 durchgeführt, wobei die Reaktionstemperatur zwischen −5°C und +30°C liegen kann.

Die erfindungsgemäße Umsetzung der Azoverbindungen der allgemeinen Formel (4) mit Cyanurchlorid wird bevorzugt in wäßrigem Medium bei einer Temperatur zwischen 10 und 80°C, vorzugsweise zwischen 20 und 60°C, und einem pH-Wert zwischen 3 und 7, vorzugsweise 4 und 7, analog bekannten Verfahrensweisen durchgeführt.

Die als Ausgangsverbindungen dienenden aromatischen Amine der allgemeinen Formel (2) sind beispielsweise in den deutschen Patentschriften Nr. 960 534, 966 651, 1 150 163 und 1 204 666 sowie in den deutschen Auslegeschriften 1 443 877 und 1 668 901 beschrieben. Solche aromatischen Amine sind beispielsweise Anilin-3-β-sulfatoäthylsulfon, 2-Amino-toluol-4-β-sulfatoäthylsulfon, 2-Amino-anisol-4-β-sulfatoäthylsulfon, 2-Amino-anisol-5-β-sulfatoäthylsulfon, 2,5-Dimethoxy-anilin-4-β-sulfatoäthylsulfon, 2,4-Dimethoxy-anilin-5-β-sulfatoäthylsulfon, 2-Methoxy-5-methyl-anilin-4-β-sulfatoäthylsulfon, 4-Amino-anisol-3-β-sulfatoäthylsulfon, 4-Amino-toluol-3-β-sulfatoäthylsulfon, 2-Amino-toluol-5-β-sulfatoäthylsulfon, 2-Äthoxy-anilin-4-β-sulfatoäthylsulfon, und 2-Äthoxy-anilin-5-β-sulfatoäthylsulfon sowie die diesen Verbindungen entsprechenden aromatischen Aminoverbindungen, in denen die β-Sulfatoäthylsulfonyl-Gruppe durch die β-Chloräthylsulfonyl-, β-Acetoxyäthylsulfonyl-, β-Phosphatoäthylsulfonyl-, β-Thiosulfatoäthylsulfonyl- oder die Vinylsulfonyl-Gruppe ersetzt ist.

Die als Ausgangsverbindung dienende Kupplungskomponente der allgemeinen Formel (3) läßt sich nach dem in der deutschen Patentschrift 485 185 beschriebenen Verfahren oder bevorzugt nach dem in der deutschen Offenlegungsschrift 3 010 502 beschriebenen Verfahren herstellen.

Die als Ausgangsverbindungen dienenden Azoverbindungen der allgemeinen Formel (4) lassen sich ebenfalls analog allgemein bekannten Verfahren synthetisieren, beispielsweise, indem man ein aromatisches Amin der allgemeinen Formel (2) diazotiert und mit 1-Amino-8-naphthol-4,6-disulfonsäure kuppelt oder indem man ein aromatisches Amin, das der obigen allgemeinen Formel (2) entspricht, in welcher das Formelglied X jedoch für die β-Hydroxyäthyl-Gruppe steht, diazotiert, mit 1-Acetylamino-8-naphthol-4,6-disulfonsäure kuppelt, an der gebildeten Monoazoverbindung die Acetylaminogruppe analog bekannten Verfahrensweisen zur Aminogruppe hydrolysiert und sodann die β-Hydroxyäthylgruppe analog bekannten Verfahrensweisen mit einem Sulfatierungsmittel in die β-Sulfatoäthyl-Gruppe überführt.

Die Abscheidung und Isolierung der erfindungsgemäß hergestellten Verbindungen der allgemeinen Formel (1) aus ihren Syntheselösungen erfolgt nach der allgemein bekannten Methoden, so beispielsweise durch Ausfällen aus dem Reaktionsmedium mittels Elektrolyten, wie beispiesweise Natriumchlorid oder Kaliumchlorid, oder aber durch Eindampfen der Reaktionslösung, beispielsweise durch Sprühtrocknung. In manchen Fällen kann es auch wünschenswert sein, die Syntheselösung, gegebenenfalls nach Zusatz von Puffersubstanzen und nach eventuellem Konzentrieren, direkt als Flüssigpräparation der färberischen Verwendung zuzuführen.

Die erfindungsgemäßen Monoazoverbindungen der allgemeinen Formel (1) besitzen wertvolle Farbstoffeigenschaften, da sie gleichzeitig infolge ihrer Dichlortriazinyl-Komponente und des Restes $-SO_2-X$ faserreaktive Eigenschaften aufweisen.

Die neuen Verbindungen werden bevorzugt zum Färben (im allgemeinen Sinne) von hydroxy- und/oder carbonamidgruppenhaltigen Materialien, beispielsweise in Form von Flächengebilden, wie Papier, Folien und Leder, oder in der Masse, wie Polyamid und Polyurethan, insbesondere von solchen Materialien in Faserform, verwendet.

Die vorliegende Erfindung betrifft somit auch die Verwendung der Verbindungen der allgemeinen Formel (1) zum Färben (einschließlich Massefärbung und Druckfärbung) dieser Materialien bzw. Verfahren zum Färben solcher Materialien in an und für sich üblicher Verfahrensweise, bei welchen man eine Verbindung der allgemeinen Formel (1) als Farbmittel einsetzt. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte oder Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Azoverbindungen lassen sich auf den genannten Substraten nach den für Reaktivfarbstofe bekannten Anwendungstechniken applizieren. So erhält man mit ihnen auf Cellulosefasern nach dem Ausziehverfahren aus langer Flotte zum Beispiel unter Verwendung der verschiedensten Alkalizusätze sehr gute Farbausbeuten.

Nach den Klotzverfahren werden auf Cellulosefasern ebenfalls ausgezeichnete Farbausbeuten erhalten, wobei durch Verweilen bei Raumtemperatur, durch Dämpfen oder mit Trockenhitze fixiert werden kann.

Nach den üblichen Druckverfahren für Cellulosefasern, einphasig durch Bedrucken mit einer Natriumbicarbonat oder ein anderes säurebindendes Mittel und die erfindungsgemäße Verbindung enthaltenden Druckpaste und durch anschließendes Dämpfen bei 100—103°C oder zweiphasig durch Bedrucken mit neutraler oder schwach saurer, die erfindungsgemäße Verbindung enthaltendender Druckpaste und anschließende Fixierung durch Hindurchführen des bedruckten Materials durch ein heißes elektrolythaltiges alkalisches Bad oder durch Überklotzen mit einer alkalischen elektrolythaltigen Klotzflotte und anschließendes Verweilen, Dämpfen oder Behandeln mit Trockenhitze, erhält man ebenfalls farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Azoverbindungen erhaltenen Fixiergrade außergewöhnlich hoch.

Die Echtheiten der auf Cellulosefasern mit Hilfe der erfindungsgemäßen Azoverbindungen erhaltenen Färbungen und Drucke sind beachtlich. Dies gilt sowohl für die wichtigsten Fabrikations- als auch für die wichtigsten Gebrauchsechtheiten. Besonders zu erwähnen sind die Lichtechtheit, die Naßechtheiten, wie Waschechtheiten, Walkechtheiten, Wasserechtheit, Seewasserechtheit, Überfärbeechtheiten und Schweißechtheiten, sowie die Plissierechtheit, die Bügelechtheit und die Reibechtheit.

Die Färbungen auf Polyamidfasern werden üblicherweise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzol- und/oder einer Aminonaphthalinsulfonsäure oder auf Basis eines Umsetzungsproduktes von beispielsweise Stearylamin mit Äthylenoxid. Die Färbungen können sowohl bei Siedetemperatur als auch bei einer Temperatur bis zu 120°C ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

## Beispiel 1

a) In ein Gemisch aus 2300 Teilen Wasser und 800 Teilen Eis werden bei einer Temperatur zwischen 0°C und 5°C schnell 194 Teile Cyanurchlorid eingetragen und gleich darauf 319 Teile 1-Amino-8-naphthol-4,6-disulfonsäure zugegeben. Man rührt bei 3 bis 5°C und einem pH-Wert zwischen 1,8 und 2,0 5 Stunden weiter und hält hierbei den pH-Wert durch portionsweise Zugabe von etwa 160 Teilen Natriumbicarbonat.

b) Getrennt hiervon löst man 281 Teile 3-β-Sulfatoäthylsulfonyl-anilin in 800 Teilen Wasser unter Zugabe von 106 Teilen Natriumbicarbonat bei einem pH-Wert zwischen 6,5 und 7,0. Zu dieser Lösung werden 175 Teile einer wäßrigen 40%igen Natriumnitritlösung gegeben und diese Mischung auf ein Gemisch aus 1000 Teilen Eis und 303 Teilen einer wäßrigen 31%igen Salzsäure laufen lassen. Nach einer Stunde wird ein kleiner Überschuß salpetriger Säure, wie üblich, durch Zugabe von etwa 3 Teilen Amidosulfonsäure zerstört.

c) Man gibt die unter b) hergestellte Diazoniumsalzsuspension zu der unter a) hergestellten Suspension der Kupplungskomponente, stellt durch Zugabe von etwa 170 Teilen Natriumbicarbonat innerhalb einer Stunde einen pH-Wert zwischen 6 und 6,5 ein und erhöht die Temperatur auf 23 bis 25°C. Man rührt 90 Minuten weiter, gibt sodann 60 Teile sekundäres Natriumphosphat hinzu und salzt die erfindungsgemäße Azoverbindung mit etwa 800 Teilen Natriumchlorid aus. Man saugt ab und trocknet bei 40°C unter reduziertem Druck.

Nach Mahlen erhält man rotes, Elektrolytsalze (vorwiegend Natriumchlorid) enthaltendes Pulver des Natriumsalzes der Verbindung der Formel

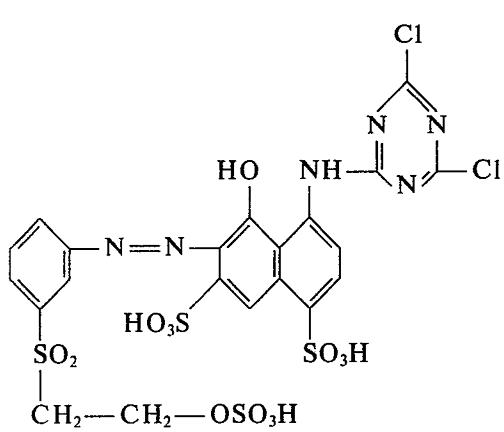

die sehr gute faserreaktive Farbstoffeigenschaften besitzt. Nach den in der Technik üblichen Applikations- und Fixiermethoden für faserreaktive Farbstoffe werden auf den genannten Materialien, wie insbesondere Cellulosefasermaterialien, kräftige, gelbstichig rote, echte Färbungen und Drucke erhalten. Bevorzugt kann diese erfindungsgemäße Azoverbindung in den üblichen einphasigen und zweiphasigen Druckverfahren für faserreaktive Farbstoffe auf Baumwollgewebe eingesetzt werden. Man erhält farbstarke klare, gelbstichig rote Drucke von sehr guten Gebrauchs- und Fabrikationsechtheiten.

## Beispiel 2

Man verfährt gemäß der Verfahrensweise des Beispiels 1, ersetzt jedoch unter a) das 3-$\beta$-Sulfatoäthylsulfonyl-anilin durch 297 Teile 3-$\beta$-Thiosulfatoäthylsulfonyl-anilin.

Man erhält das Alkalimetallsalz, wie Natriumsalz, der Verbindung der Formel

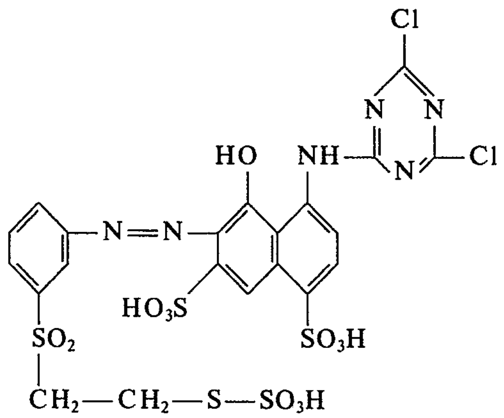

die ebenfalls vergleichbar gute Farbstoffeigenschaften besitzt und beispielsweise auf Baumwollgewebe in den Druckverfahren farbstarke, klare gelbstichig rote Drucke mit den im Beispiel 1 angegebenen guten Eigenschaften liefert.

## Beispiel 3

183 Teile 3-Vinylsulfonyl-anilin werden in 300 Teilen einer wäßrigen 31%igen Salzsäure und 3000 Teilen Wasser bei einer Temperatur von 0°C bis 5°C gelöst und bei dieser Temperatur durch Zugabe von 200 Volumenteilen einer wäßrigen 5 n-Natriumnitritlösung diazotiert. Man rührt 30 Minuten weiter und zerstört überschüssige salpetrige Säure mit wenig Amidosulfonsäure.

Zur Herstellung einer erfindungsgemäßen Vinylsulfonyl-Monoazoverbindung verfährt man sodann gemäß den Verfahrensweisen b) und c) des Beispiels 1. Man isoliert die hergestellte erfindungsgemäße Azoverbindung in üblicher Weise durch Sprühtrocknen oder Aussalzen und erhält ein elektrolythaltiges Pulver des Alkalimetallsalzes, wie Natrium- oder Kaliumsalz, der Verbindung der Formel

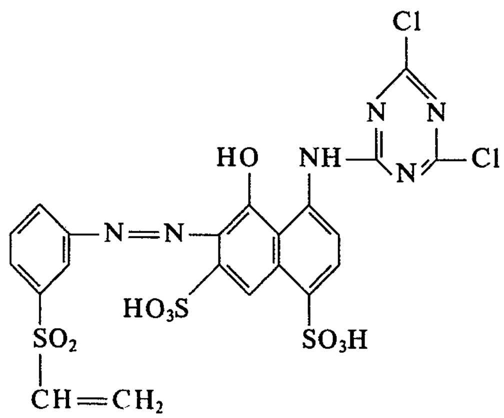

Diese erfindungsgemäße Azoverbindung zeigt ebenfalls sehr gute faserreaktive Farbstoffeigenschaften und liefert, wie die erfindungsgemäßen Verbindungen der Beispiele 1 und 2, beispielsweise auf Baumwollgewebe gemäß den in der Technik für faserreaktive Farbstoffe üblichen Druckverfahren klare, gelbstichig rote Drucke mit guten Echtheiten.

## Beispiele 4 bis 16

In den nachfolgenden Tabellenbeispielen sind weitere erfindungsgemäße Monoazoverbindungen entsprechend der allgemeinen Formel (1) mittels ihrer Diazokomponente beschrieben. Sie lassen sich in erfindungsgemäßer Weise durch Umsetzung der Diazokomponente entsprechend der allgemeinen Formel (2) und der 1-(Dichlor-s-triazinylamino)-4,6-disulfo-8-naphthol-Verbindung der Formel (4) herstellen, beispielsweise analog der im Beispiel 1 beschriebenen Verfahrensweise. Diese durch ihre Diazokomponenten in den Beispielen 4 bis 16 gekennzeichneten erfindungsgemäßen Monoazoverbindungen zeigen ebenfalls sehr gute faserreaktive Farbstoffeigenschaften. Sie färben die in der Beschreibung genannten Materialien, insbesondere Cellulosefasermaterialien, nach den in der Technik üblichen Färbe- und insbesondere Druckverfahren für faserreaktive Farbstoffe in der in dem jeweiligen Tabellenbeispiel angegebenen Nuance in hoher Farbstärke und guten Echtheiten.

| Beispiel | Diazokomponente der Formel (2) | Nuance |
|---|---|---|
| 4 | 3-β-Chloräthylsulfonyl-anilin | gelbstichigrot |
| 5 | 3-β-Acetoxyäthylsulfonyl-anilin | gelbstichigrot |
| 6 | 3-β-Phosphatoäthylsulfonyl-anilin | gelbstichigrot |
| 7 | 3-Methyl-5-β-sulfatoäthylsulfonyl-anilin | rot |
| 8 | 2-Methoxy-4-β-sulfatoäthylsulfonyl-anilin | blaustichigrot |
| 9 | 2-Methoxy-5-β-sulfatoäthylsulfonyl-anilin | blaustichigrot |
| 10 | 4-Methoxy-3-β-sulfatoäthylsulfonyl-anilin | blaustichigrot |
| 11 | 4-Methyl-3-β-sulfatoäthylsulfonyl-anilin | rot |
| 12 | 2,4-Dimethoxy-5-β-sulfatoäthylsulfonyl-anilin | blaustichigrot |
| 13 | 2-Methoxy-5-methyl-4-β-sulfatoäthylsulfonyl-anilin | rubin |
| 14 | 2,5-Dimethoxy-4-β-sulfatoäthylsulfonyl-anilin | rubin |
| 15 | 2-Methyl-4-β-sulfatoäthylsulfonyl-anilin | rot |
| 16 | 2-Äthoxy-5-β-sulfatoäthylsulfonyl-anilin | blaustichigrot |

## Beispiel 17

611 Teile der Monoazoverbindung der Formel

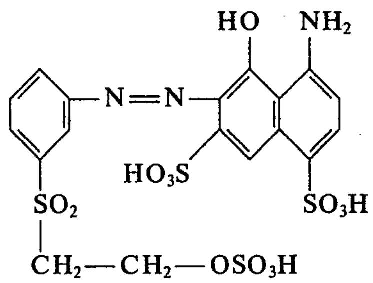

die in bekannter Weise beispielsweise durch Kupplung von diazotiertem 3-β-Hydroxyäthylsulfonyl-anilin auf 1-Acetylamino-8-naphthol-4,6-disulfonsäure, Hydrolyse der Acetylaminogruppe zur freien Aminogruppe und anschließende Sulfatierung der β-Hydroxyäthylsulfonyl-Gruppe erhalten werden

kann, wird als Natriumsalz in 4000 bis 5000 Teilen Wasser gelöst. Zu dieser Lösung gibt man bei einer Temperatur von 0°C bis 10°C 194 Teile Cyanurchlorid hinzu, rührt diesen Ansatz bei dieser Temperatur und bei einem pH-Wert zwischen 2 und 3,5 einige Stunden, wobei der pH-Wert durch portionsweise Zugabe von Natriumbicarbonat gehalten wird. Nach erfolgter Umsetzung stellt man den pH mit Natriumbicarbonat auf einen Wert zwischen 6 und 6,5 ein, gibt 60 Teile sekundäres Natriumphosphat hinzu und salzt die erfindungsgemäße Verbindung mit Natriumchlorid aus. Man saugt ab, trocknet und mahlt. Es wird ein rotes, elektrolythaltiges Pulver mit dem Natriumsalz der im Beispiel 1 formelmäßig angegebenen erfindungsgemäßen Verbindung erhalten, die die gleich guten Eigenschaften wie die nach Beispiel 1 hergestellte erfindungsgemäße Monoazoverbindung besitzt.

**Patentansprüche**

1. Wasserlösliche Azoverbindungen der allgemeinen Formel (1)

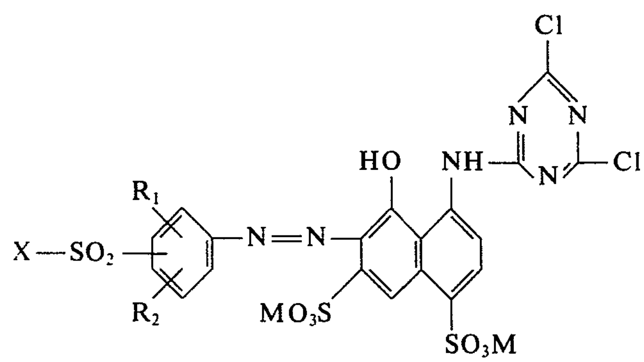

(1)

in welcher $R_1$ ein Wasserstoffatom, eine Alkylgruppe von 1 bis 4 C-Atomen oder eine Alkoxygruppe von 1 bis 4 C-Atomen bedeutet, $R_2$ gleich oder verschieden zu $R_1$ ist und ein Wasserstoffatom, eine Alkylgruppe von 1 bis 4 C-Atomen oder eine Alkoxygruppe von 1 bis 4 C-Atomen ist, die Gruppe $-SO_2-X$ in meta- oder para-Stellung zur Azogruppe an den Benzolkern gebunden ist, wobei jedoch $R_1$ und $R_2$ gleichzeitig nicht Wasserstoff sind, falls die Gruppe $-SO_2-X$ in para-Stellung zur Azogruppe gebunden ist, X die Vinylgruppe oder eine Gruppe der Formel

$$-CH_2-CH_2-Y$$

ist, in welcher Y eine alkalisch eliminierbare Gruppe bedeutet, und M für ein Wasserstoffatom oder ein Alkalimetall oder das Äquivalent eines Erdalkalimetalls steht.

2. Verbindungen nach Anspruch 1 der allgemeinen Formel

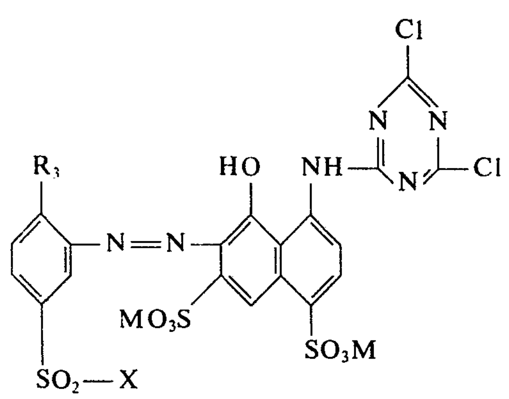

in welcher $R_3$ ein Wasserstoffatom, die Methyl- oder Äthylgruppe oder die Methoxy- oder Äthoxygruppe bedeutet und M und X die in Anspruch 1 genannten Bedeutungen besitzen.

3. Verbindungen nach Anspruch 1 der Formel

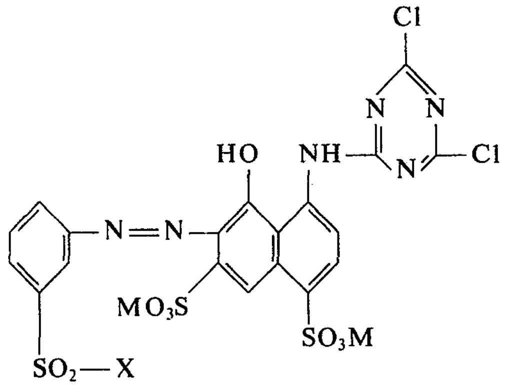

in welcher M und X die in Anspruch 1 genannten Bedeutungen haben.

4. Verbindungen nach Anspruch 1 der Formel

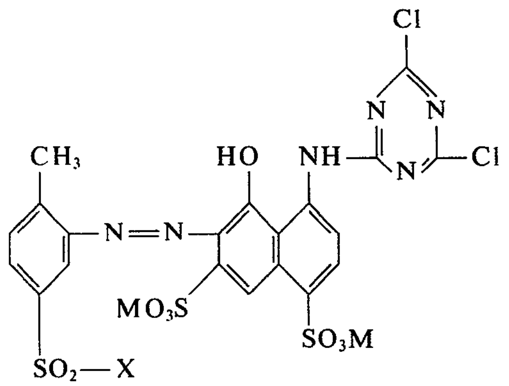

in welcher M und X die in Anspruch 1 genannten Bedeutungen haben.

5. Verbindungen nach Anspruch 1 der Formel

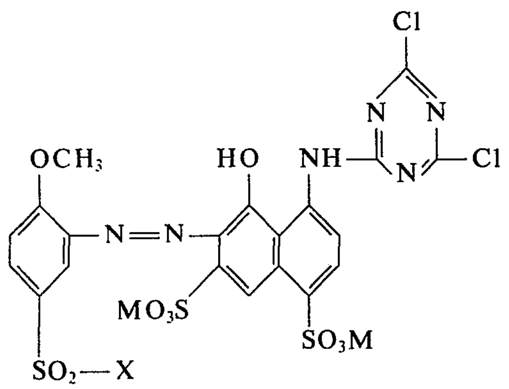

in welcher M und X die in Anspruch 1 genannten Bedeutungen haben.

6. Verbindungen nach einem der Ansprüche 1 bis 5, dadurch gekennzeichnet, daß X für die $\beta$-Sulfatoäthyl-Gruppe steht.

7. Verbindungen nach einem der Ansprüche 1 bis 5, dadurch gekennzeichnet, daß X für die Vinylgruppe steht.

8. Verbindungen nach einem der Ansprüche 1 bis 7, dadurch gekennzeichnet, daß M für Natrium oder Kalium steht.

9. Verfahren zur Herstellung der in Anspruch 1 angegebenen und definierten Verbindungen der allgemeinen Formel (1), dadurch gekennzeichnet, daß man ein aromatisches Amin der allgemeinen Formel (2)

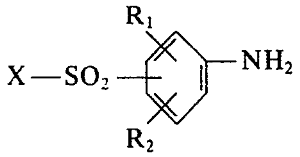

(2)

in welcher $R_1$, $R_2$ und X die in Anspruch 1 genannten Bedeutungen haben und die Gruppe $-SO_2-X$ an den Benzolkern in meta- oder para-Stellung zur Aminogruppe gebunden ist, $R_1$ und $R_2$ jedoch beide nicht gleich Wasserstoff sind, falls die Gruppe $-SO_2-X$ in para-Stellung zur Aminogruppe steht, diazotiert und mit einer Verbindung der allgemeinen Formel (3)

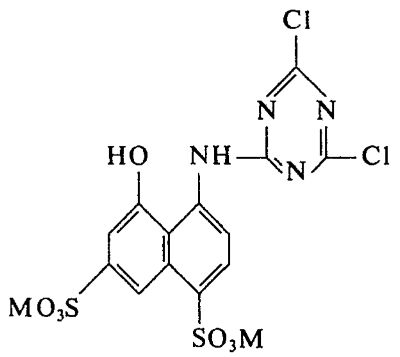

(3)

mit M der in Anspruch 1 genannten Bedeutung kuppelt, oder daß man eine Monoazoverbindung der allgemeinen Formel (4)

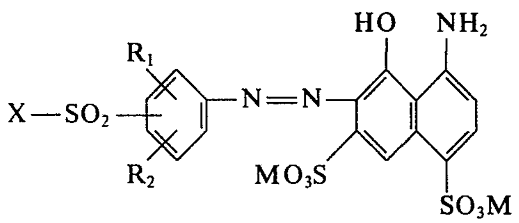

(4)

in welcher M, $R_1$, $R_2$ und die Gruppe $-SO_2-X$ wie in Anspruch 1 definiert sind, mit 2,4,6-Trichlors-triazin umsetzt.

10. Verwendung der in Anspruch 1 genannten und definierten Verbindungen der allgemeinen Formel (1) als Farbstoffe.

11. Verwendung nach Anspruch 10 zum Färben und Bedrucken von hydroxy- und/oder carbonamidgruppenhaltigen Materialien, insbesondere Fasermaterialien.

## Claims

1. Water-soluble azo compounds of the general formula (1)

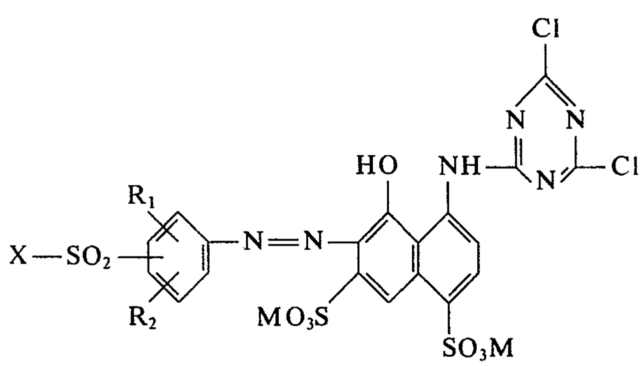

(1)

in which $R_1$ denotes a hydrogen atom, an alkyl group of 1 to 4 C-atoms or an alkoxy group of 1 to 4 C-atoms, $R_2$ is identical to or different from $R_1$ and is a hydrogen atom, an alkyl group of 1 to 4 C-atoms or an alkoxy group of 1 to 4 C-atoms, the group $-SO_2-X$ is bonded to the benzene nucleus in the meta- or

para-position relative to the azo group, but $R_1$ and $R_2$ are not simultaneously hydrogen if the group $-SO_2-X$ is bonded in the para-position relative to the azo group, X is the vinyl group or a group of the formula

$$-CH_2-CH_2-Y$$

in which Y denotes a group which can be eliminated under alkaline conditions, and M represents a hydrogen atom or an alkali metal or the equivalent of an alkaline earth metal.

2. Compounds according to claim 1 of the general formula

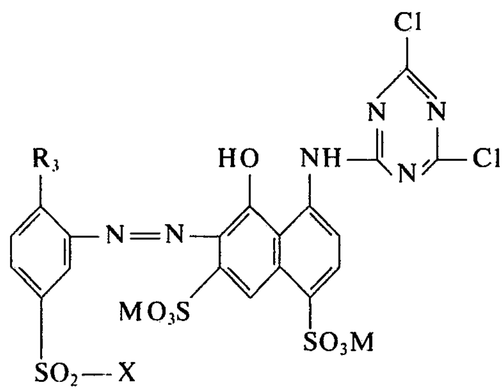

in which $R_3$ denotes a hydrogen atom, the methyl or ethyl group or the methoxy or ethoxy group, and M and X have the meanings mentioned in claim 1.

3. Compounds according to claim 1 of the formula

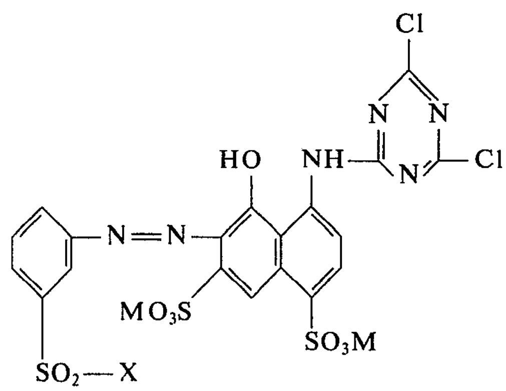

in which M and X have the meanings mentioned in claim 1.

4. Compounds according to claim 1 of the formula

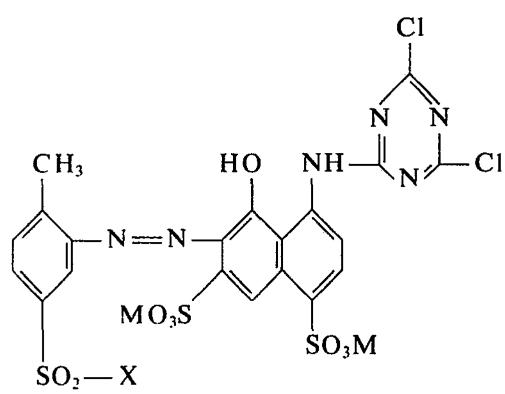

in which M and X have the meanings mentioned in claim 1.

5. Compounds according to claim 1 of the formula

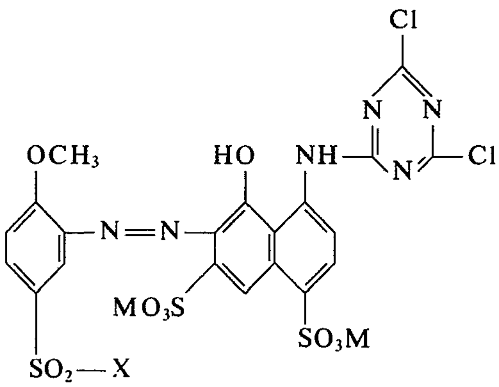

in which M and X have the meanings mentioned in claim 1.

6. Compounds according to any of claims 1 to 5, characterized by that X represents the $\beta$-sulfatoethyl group.

7. Compounds according to any of claims 1 to 5, characterized by that X represents the vinyl group.

8. Compounds according to any of claims 1 to 7, characterized by that M represents sodium or potassium.

9. A process for preparing the compounds of the formula (1), indicated and defined in claim 1, characterized by that an aromatic amine of the general formula (2)

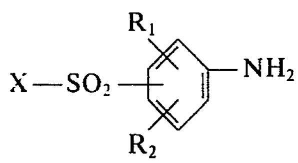

(2)

in which $R_1$, $R_2$ and X have the meanings mentioned in claim 1 and the group $-SO_2-X$ is bonded to the benzene nucleus in the meta- or para-position relative to the amino group, but $R_1$ and $R_2$ are not simultaneously hydrogen if the group $-SO_2-X$ is in the para-position relative to the amino group, is diazotized and coupled with a compound of the general formula (3)

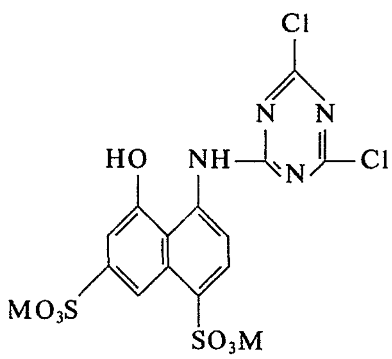

(3)

with M of the meaning mentioned in claim 1, or that a reacting monoazo compound of the general formula (4)

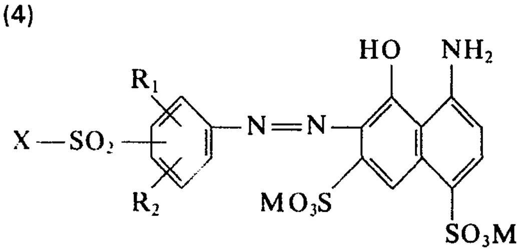

(4)

in which M, $R_1$, $R_2$ and the group $-SO_2-X$ are defined as claim 1, is reacted with 2,4,6-trichloro-s-triazine.

10. The use of the compounds of the general formula (1) mentioned and defined in claim 1, as dyestuffs.

11. The use according to claim 10 for dyeing and printing materials, in particular fiber materials, containing hydroxy and/or carbonamide groups.

**Revendications**

1. Composés azoïques solubles dans l'eau qui répondent à la formule générale 1:

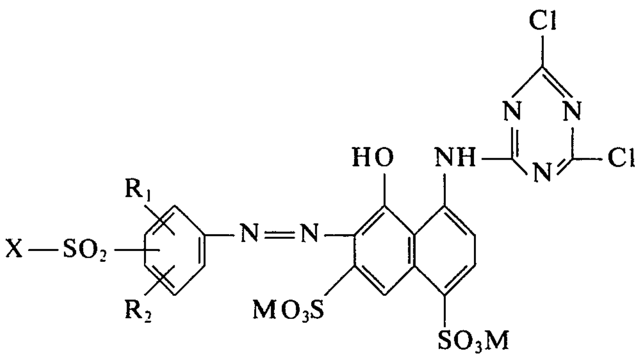

(1)

dans laquelle $R_1$ représente un atome d'hydrogène, un radical alkyle contenant de 1 à 4 atomes de carbone ou un radical alcoxy contenant de 1 à 4 atomes de carbone, $R_2$ est identique à $R_1$ ou est différent de $R_1$ et représente un atome d'hydrogène, un radical alkyle contenant de 1 à 4 atomes de carbone ou un radical alcoxy contenant de 1 à 4 atomes de carbone, le radical $-SO_2-X$ occupant, sur le noyau benzénique, une position méta ou la position para relativement au radical azo, et $R_1$ et $R_2$ ne pouvant représenter chacun en même temps l'hydrogène lorsque le radical $-SO_2-X$ est en position para relativement au radical azo, X représente un radical vinyleou un radical de formule $-CH_2CH_2-Y$ dans lequel Y désigne un radical éliminable en milieu alcalin, et M représente un atome d'hydrogène, un métal alcalin ou un équivalent d'un métal alcalinoterreux.

2. Composés selon la revendication 1 qui répondent à la formule générale suivante:

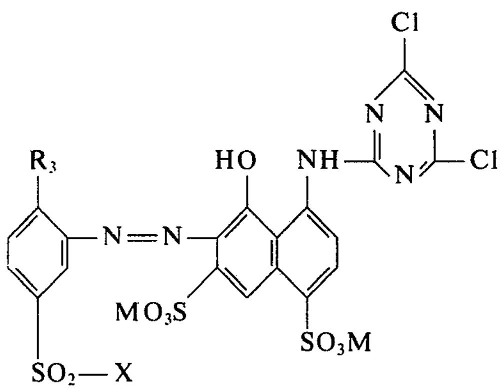

dans laquelle $R_3$ représente un atome d'hydrogène ou un radical méthyle, éthyle, méthoxy ou éthoxy, tandis que M et X ont les significations données à la revendication 1.

3. Composés selon la revendication 1 qui repondent à la formule

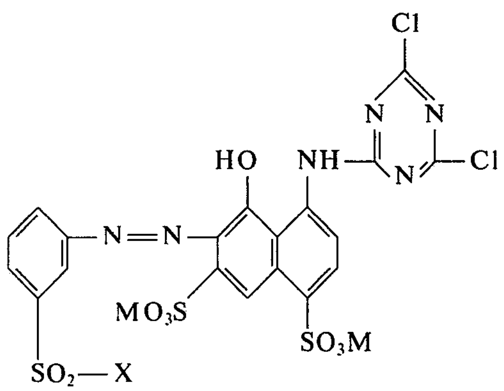

dans laquelle M et X ont les significations données à la revendication 1.

4. Composés selon la revendication 1 qui répondent à la formule

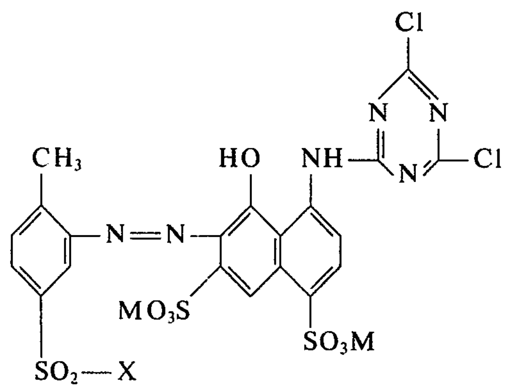

dans laquelle M et X ont les significations données à la revendication 1.

5. Composés selon la revendication 1 qui répondent à la formule

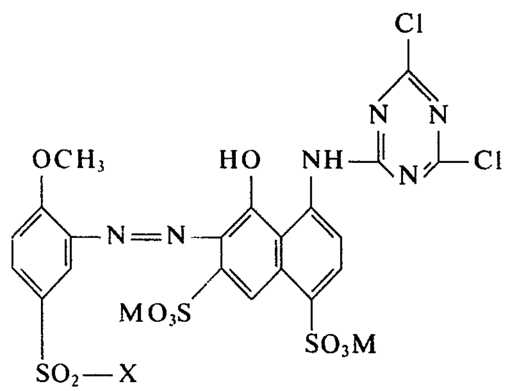

dans laquelle M et X ont les significations données à la revendication 1.

6. Composés selon l'une quelconque des revendications 1 à 5, caractérisés en ce que X représente un radical sulfato-2 éthyle.

7. Composés selon l'une quelconque des revendications 1 à 5, caractérisés en ce que X représente un radical vinyle.

8. Composés selon l'une quelconque des revendications 1 à 7, caractérisés en ce que M représente le sodium ou le potassium.

9. Procédé de préparation des composés répondant à la formule générale 1 qui a été représentée et définie à la revendication 1, procédé caractérisé en ce qu'on diazote une amine aromatique répondant à la formule générale 2:

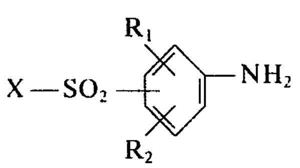

(2)

dans laquelle $R_1$, $R_2$ et X ont les significations données à la revendication 1 et dans laquelle le radical $-SO_2-X$ occupe, sur le noyau benzénique, une position méta ou la position para relativement au radical amino, $R_1$ et $R_2$ ne pouvant toutefois pas représenter chacun en même temps un atome d'hydrogène dans le cas ou le radical $-SO_2-X$ se trouve en position para relativement au radical amino, et on copule le diazoïque avec un composé répondant à la formule générale 3:

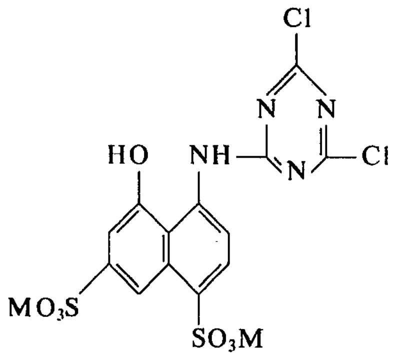

(3)

dans laquelle M a la signification donnée à la revendication 1, ou on fait réagir un composé monoazoïque répondant à la formule générale 4:

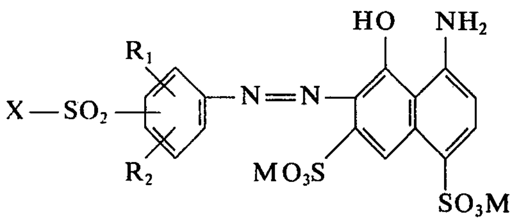

(4)

dans laquelle M, $R_1$, $R_2$ et le radical $-SO_2-X$ ont les significations données à la revendication 1, avec la trichloro-2,4,6-triazine-1,3,5.

10. Application des composés de formule générale 1 selon la revendication 1 en tant que colorants.

11. Application selon la revendication 10 à la teinture et à l'impression de matières contenant des radicaux hydroxy et/ou des radicaux carbamoyles, plus particulièrement de matières fibreuses de ce genre.